# FASCICULE DE BREVET EUROPEEN

(11) **EP 0 444 569 B1**
(45) Date de publication et mention de la délivrance du brevet: **07.12.1994**
(21) Numéro de dépôt: 91102722.5
(22) Date de dépôt: 25.02.1991
(51) Int. Cl.: H02H 9/00, H04B 15/02

(54) **Dispositif de protection contre les perturbations engendrées par la connexion à une source d'alimentation électrique continue ou la déconnexion de cette source d'un ensemble électronique, sur l'alimentation délivrée par cette source**
Vorrichtung zum Schutz gegen durch An- und Ausschaltung einer elektronischen Einheit an eine Gleichspannungsspeisung erzeugte Speisespannungsstörungen
Device for protection against transients on the DC-voltage generated by the connection or disconnection of an electronic assembly to the supply source

(30) Priorité: 28.02.1990 FR 9002511
(43) Date de publication de la demande: 04.09.1991
(73) Titulaire: ALCATEL CIT, 75008 Paris (FR)
(72) Inventeur: Gauthier, Claude, F-91880 Bouville (FR)
(74) Mandataire: Weinmiller, Jürgen

(56) Documents cités:
- FR-A- 2 615 669
- US-A- 3 912 974
- IBM TECHNICAL DISCLOSURE BULLETIN, vol. 32, no. 2, juillet 1989, pages 318-320, Armonk, NY, US, "Method of pre-charging logic card (decoupling) capacitors".

## Description

La présente invention concerne un dispositif de protection contre les perturbations engendrées par la connexion à une source d'alimentation électrique continue ou la déconnexion de cette source d'un ensemble électronique, sur l'alimentation délivrée par cette source.

Les équipements électroniques complexes tels que les équipements de télécommunications sont constitués généralement d'ensembles électroniques tel que des cartes à circuits imprimés équipés de composants électroniques, enfichées dans des bacs, ou châssis, eux-mêmes regroupés dans des bâtis ou armoires.

L'alimentation électrique nécessaire au fonctionnement des composants électroniques portés par ces cartes est généralement délivrée par une source de tension continue commune aux différentes cartes d'un même bâti.

Il est par ailleurs prévu en général sur chaque carte, dans le circuit d'accès de la tension d'alimentation de cette carte, une ou plusieurs cellules de filtrage aptes à éviter la transmission aux circuits électroniques de cette carte d' éventuels parasites électriques présents sur la tension d'alimentation et inversement la transmission à la source de tension continue d'alimentation d'éventuels parasites électriques générés par cette carte en fonctionnement.

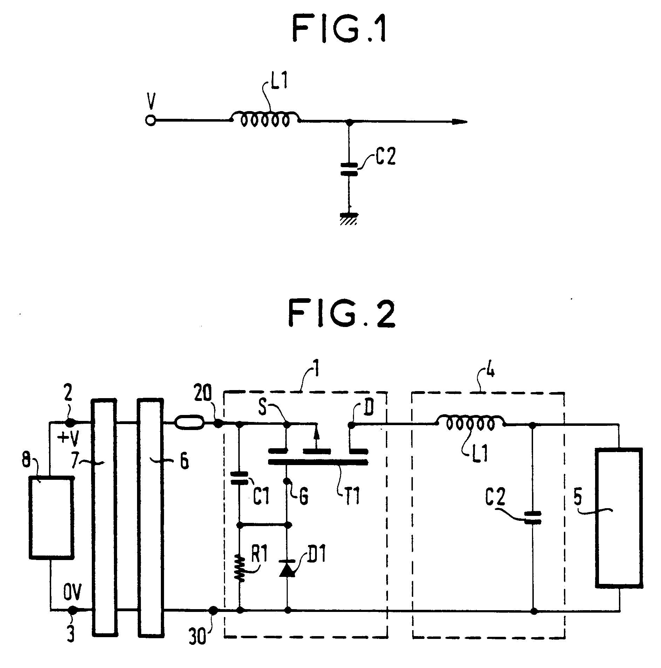

Un exemple d'une telle cellule de filtrage est représentée sur la figure 1 ; il s'agit d'une cellule de type L-C, comportant une inductance L1 et un condensateur C2, la tension continue d'alimentation V étant appliquée aux bornes de l'ensemble L1-C2, et la tension de sortie étant prise aux bornes du condensateur C2.

La fonction de filtrage de cette cellule est d'autant mieux remplie que les valeurs de l'inductance L1 et du condensateur C2 sont élevées. Les valeurs de ces éléments sont cependant optimisées pour tenir compte d'autres critères tels que encombrement et coût.

La présence de telles cellules de filtrage sur ces cartes augmente cependant les perturbations électriques au moment de l'enfichage ou du retrait de ces cartes, et ce d'autant plus que la consommation de courant par ces cartes est élevée, ce qui est de plus en plus le cas étant donnée la tendance croissante à une concentration élevée de circuits sur ces cartes.

Ainsi, à la connexion d'une carte équipée d'une telle cellule de filtrage, le condensateur C2 se charge très rapidement à travers l'inductance L1, ce qui entraîne un appel de courant important sur la source d'alimentation.

Bien que cette source, consistant généralement en un convertisseur continu-continu (par exemple en un convertisseur 48V/5V dans le cas d'équipements de télécommunications) soit équipée d'une boucle d'asservissement en tension, cet asservissement est en général lent à se produire devant le temps de charge du condensateur C2 et il se produit une chute momentanée de la tension d'alimentation pendant ce temps de charge, pouvant perturber le fonctionnement de certains circuits en cours de fonctionnement à cet instant sur d'autres cartes.

En outre, à la déconnexion d'une carte équipée d'une telle cellule de filtrage, l'arrêt brusque du courant circulant dans l'inductance L1 provoque une surtension pouvant atteindre en pratique plusieurs dizaines de volts, qui provoque un arc au niveau des contacts du connecteur de la carte à l'instant où celle-ci est déconnectée.

Pendant ce très court instant (en pratique quelques microsecondes) cette surtension est transmise vers la source d'alimentation, pouvant perturber le fonctionnement de certains circuits en fonctionnement, car elle est à l'origine d'une perturbation électrostatique qui engendre une perturbation électromagnétique.

Pour éviter les inconvénients précités se produisant lors de la connexion de la carte, une solution serait d'augmenter la valeur de l'inductance L1. Le temps de charge, du condensateur C2 lors de la connexion serait alors plus long, permettant à la boucle d'asservissement du convertisseur continu-continu de corriger la chute de tension, mais au moment du retrait de la carte la surtension due à l'inductance L1 serait encore plus importante.

Cette solution conduirait de plus à un encombrement et à un coût augmentés.

Une autre solution consisterait à diminuer la valeur du condensateur C2 ou à disposer une résistance en série avec ce condensateur, d'où une impédance plus grande présentée par cet élément et un appel de courant par la carte considérée, sur la source d'alimentation, moins fort à la connexion de cette carte.

Cette solution conduirait cependant à une réduction des performances de la cellule de filtrage équipant cette carte.

La présente invention a pour but d'éviter ces inconvénients, c'est-à-dire d'éviter la génération des perturbations décrites, sur l'alimentation délivrée par la source commune d'alimentation des cartes, au moment de la connexion ou de la déconnexion de cartes, tout en maintenant l'efficacité des cellules de filtrage de ces cartes optimale.

La présente invention a pour objet un dispositif de protection contre les perturbations engendrées par la connexion à une source d'alimentation électrique continue ou la déconnexion de cette source d'un ensemble électronique, sur l'alimentation électrique délivrée par cette source, ledit dispositif étant essentiellement caractérisé en ce qu'il comporte au moins un élément d'impédance variable, et des moyens de commande de cette impédance, de manière que celle-ci présente une première valeur très grande lorsque ledit ensemble électronique est à l'état déconnecté, une deuxième valeur très faible lorsque cet ensemble est à l'état connecté, et une valeur variant lentement de la première à la deuxième valeur au passage de l'état déconnecté à l'état connecté, et variant rapidement de la deuxième à la première valeur au passage de l'état connecté à l'état déconnecté, le courant obtenu en sortie de cet élément alimentant ledit ensemble électronique.

D'autres objets et caractéristiques de la présente invention apparaîtront à la lecture de la description suivante d'un exemple de réalisation, faite en relation avec les dessins ci-annexés dans lesquels, outre la figure 1 déjà décrite et représentant une cellule de filtrage,
- la figure 2 montre un schéma électrique d'un dispositif de protection, suivant un premier mode de réalisation de l'invention,
- la figure 3 montre un schéma électrique d'un dispositif de protection suivant un deuxième mode de réalisation de l'invention.

Le dispositif de protection suivant l'invention, représenté sur la figure 2 où il est repéré par 1 est placé entre des bornes 20 et 30 reliées respectivement aux accès d'alimentation 2 et 3 d'un ensemble électronique qu'il équipe, et la cellule de filtrage 4 équipant cet ensemble.

L'ensemble électronique considéré est par exemple une carte à circuits imprimés enfichable dans un châssis ou bac d'un bâti d'équipement électronique ayant une source d'alimentation continue commune aux différentes cartes des différents châssis.

Entre les bornes 20 et 30 et les accès d'alimentation 2, 3, qui sont connectés à la source de tension continue d'alimentation reprérée 8, sont disposés un connecteur 6 dit connecteur de carte, et un connecteur 7, dit connecteur de châssis, ou de bac, contenant la carte considérée, ces deux connecteurs permettant d'établir une continuité électrique entre la carte et ses accès d'alimentation 2, 3, lorsque la carte est connectée, ou de rompre cette continuité lorsque la carte est déconnectée.

En sortie de la cellule de filtrage 4 est disposée une charge 5 représentant les circuits de la carte considérée, autres que le dispositif de protection 1 et la cellule de filtrage 4.

Dans le mode de réalisation illustré sur la figure 2, une tension d'alimentation d'une seule polarité, positive par exemple (notée +V) est utilisée, cette tension étant appliquée à l'un des accès d'alimentation, l'accès 2 par exemple, l'autre accès étant mis au potentiel de référence 0 volt.

Sur la figure 2 le dispositif de protection 1 comporte, dans l'exemple de réalisation décrit, une cellule d'intégration formée d'un condensateur C1 et d'une résistance R1 branchés en série dans cet ordre entre les bornes 20 et 30, et un transistor T1 de puissance à effet de champ constitué en l'occurence d'un transistor du type MOS à canal P. La tension d'entrée de cette cellule, constituée par la tension aux bornes du condensateur C1 et de la résistance R1 en série est égale à +V lorsque la carte est connectée ou à 0 volt lorsque la carte est déconnectée. La tension de sortie de cette cellule d'intégration, prise aux bornes du condensateur C1, constitue la tension source-grille VSG, du transistor T1 dont la source est connectée à la borne 20 et la grille au point commun à la capacité C1 et à la résistance R1. Le courant de drain ID délivré par le transistor T1 alimente la cellule de filtrage L1-C2.

Une diode D1 est par ailleurs disposée entre le point commun au condensateur C1 et à la résistance R1, et la borne 30.

Le fonctionnement de ce dispositif de protection est le suivant. A la connexion de la carte équipée de ce dispositif de protection, la tension d'entrée de la cellule d'intégration R1-C1 passe brusquement de 0 à +V. La tension de sortie de cette cellule d'intégration, c 'est-à-dire la tension source-grille VSG du transistor T1, croît alors lentement de 0 à +V. A partir d'une certaine valeur de la tension VSG, le-transistor T1, initialement bloqué, devient conducteur.

La résistance apparente drain-source du transistor T1, initialement très grande (> 1 MΩ par exemple), diminue alors progressivement et le condensateur C2 se charge donc progressivement avec un courant limité par la valeur de cette résistance.

Lorsque le condensateur C1 est complètement chargé, le transistor T1 est saturé, sa résistance apparente drain-source est alors très faible (de l'ordre de 100 mΩ par exemple) et le dispositif de protection est alors "transparent".

On notera que pour que ce dispositif de protection soit efficace, il faut que le temps pendant lequel le courant de charge du condensateur C2 est ainsi contrôlé soit très supérieur (de l'ordre de 20 ms par exemple) au temps de charge du condensateur C2 en l'absence de ce dispositif de protection (de l'ordre de 200 µs par exemple), de manière à permettre à la boucle d'asservissement du convertisseur continu-continu de remplir son rôle, c'est-à-dire ici d'éviter une chute momentanée de la tension d'alimentation +V. Les composants R1, C1 et T1 sont déterminés en conséquence. La résistance apparente drain-source du transistor T1 à l'état saturé est par ailleurs déterminée en fonction du courant nécessaire pour alimenter la carte quand celle-ci fonctionne en régime établi.

A la déconnexion de la carte, le condensateur C1 étant initialement chargé à la tension +V et le potentiel appliqué à l'une de ses bornes, connectée à la borne 20 c'est-à-dire à l'accès 2 à travers les connecteurs 6 et 7, variant brusquement de +V à 0, le potentiel à son autre borne, connectée à la cathode de la diode D1 (l'anode de la diode D1 étant connectée à l'accès 3 par les connecteurs 6 et 7) devient brusquement négatif par rapport au potentiel 0 volt. La diode D1 initialement bloquée devient alors passante. Le condensateur C1 se décharge donc très rapidement à travers cette diode tandis que la tension source-grille VSG du transistor T1 décroît très rapidement entraînant le blocage du transistor T1. Ce blocage qui intervient très rapidement (en pratique en quelques nanosecondes), empêche toute perturbation côté drain, due notamment à la présence de la cellule de filtrage L1-C2, d'être transmise côté source du transistor T1, c'est-à-dire du côté de la source de tension continue d'alimentation.

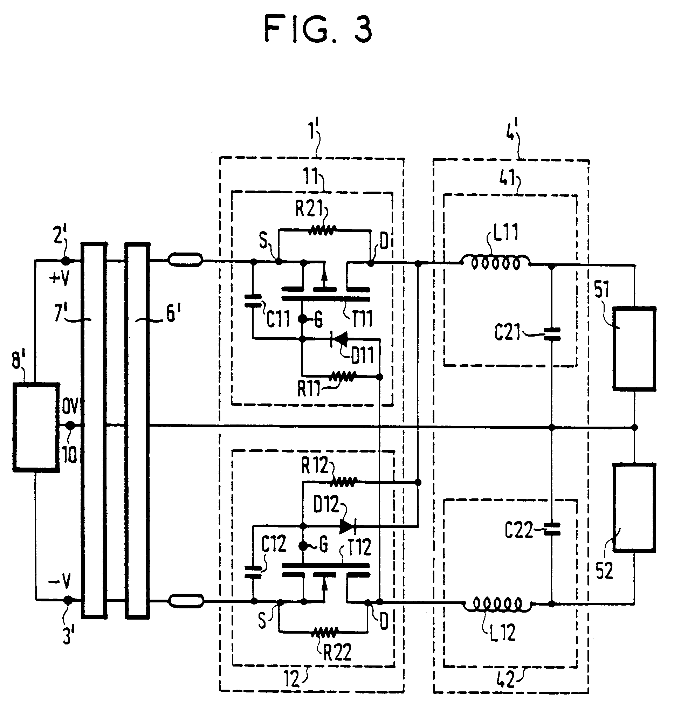

Le mode de réalisation du dispositif de protection selon l'invention représenté sur la figure 3 correspond au cas d'une alimentation de la carte avec une tension positive +V et une tension négative -V, appliquées respectivement sur les accès d'alimentation repérés 2′ et 3′, le potentiel de référence 0V étant mis sur un accès repéré 10. La source d' alimentation fournissant les deux tensions +V et -V et à laquelle sont connectés les accès 2′, 3′ et 10 est référencée 8′ et le dispositif de protection lui-même est référencé 1′.

La cellule de filtrage, repérée 4′, se décompose alors de manière connue en deux cellules de filtrage 41 et 42 de ces deux tensions. Ces deux cellules sont ici chacune analogue à la cellule 4 de la figure 2 et comportent donc chacune une inductance et un condensateur, respectivement L11 et C21 et L12 et C22. En sortie de ces deux cellules 41 et 42 sont disposées respectivement deux charges 51 et 52 représentant les circuits de la carte considérée alimentés à travers le dispositif de protection 1′ et respectivement les cellules 41 et 42.

Le dispositif de protection 1′, relié aux accès d'alimentation 2′, 3′ et 10 par un connecteur de carte 6′ et un connecteur de châssis ou bac 7′, se décompose également en deux dispositifs 11 et 12 comportant chacun, comme le dispositif de protection 1 de la figure 2, un transistor de puissance à effet de champ T11, une cellule d'intégration R11, C11 et une diode D11 pour le premier, un transistor de puissance à effet de champ T12, une cellule d'intégration R12, C12 et une diode D12 pour le deuxième, avec cependant les différences suivantes.

Si le transistor T11 du dispositif 11 est comme le transistor T1 du dispositif 1 de la figure 2 un transistor de type MOS à canal P, sa source étant reliée à travers les connecteurs 6′ et 7′ à l'accès d'alimentation 2′ au potentiel positif +V (et son drain à la borne d'entrée de la cellule de filtrage 41 connectée à l'inductance L11), le transistor T12 du dispositif 12 est un transistor de type MOS à canal N, sa source étant reliée à travers les connecteurs 6′ et 7′ à l'accès d'alimentation 3′ au potentiel négatif -V (et son drain à la borne d'entrée de la cellule de filtrage 42 connectée à l'inductance L12).

Le point commun à la résistance R11 et à la diode D11, côté anode de cette dernière, est connecté au drain D du transistor T12, et de même le point commun à la résistance R12 et à la diode D12, côté cathode de cette dernière, est connecté au drain D du transistor T11. Ceci permet d'obtenir, à la déconnexion de la carte équipée d'un tel dispositif de protection, une mise en conduction des diodes D11 et D12, et par suite un blocage des transistors T11 et T12, plus rapide que dans le cas du montage de la figure 2.

Une résistance R21 est par ailleurs connectée entre la source S et le drain D du transistor T11, de même une résistance R22 est connectée entre la source S et le drain D du transistor T12. Ceci permet de procurer, à la connection de la carte équipée de ce dispositif de protection (c'est-à-dire en partant d'un état initial où les transistors T11 et T12 sont bloqués), un circuit de charge pour le condensateur C11, en l'occurence à travers la résistance R11 et la résistance R22, et de même un circuit de charge pour le condensateur C12, en l'occurence à travers la résistance R12 et la résistance R21.

Afin de ne pas diminuer les performances du montage, les résistances R21 et R22 doivent avoir une valeur élevée, par exemple de l'ordre de 1MΩ.

On a décrit l'invention dans le cadre d'une application à une carte à circuits imprimés enfichable dans un châssis d'un bâti d'équipement électronique mais il est bien évident qu'elle n'est pas limitée à cette application. Elle peut s'appliquer en particulier à chaque ensemble électronique d'un groupe d'ensembles électroniques alimentés par une source d'alimentation électrique continue commune et individuellement connectables et déconnectables de cette source, pour éviter la génération, au moment de la connexion ou de la déconnexion électrique d'un de ces ensembles, de perturbations sur l'alimentation délivrée par cette source commune et par suite sur l'alimentation de ceux des autres ensembles du groupe qui se trouvent à ce moment-là connectés à la source.

Par ailleurs, on notera que le dispositif de protection selon l'invention, particulièrement efficace en cas d'utilisation de cellules de filtrage individuelles de l'alimentation au niveau de ces différents ensembles électroniques, conserve néanmoins son utilité en l'absence de telles cellules de filtrage individuelles, notamment pour éviter une éventuelle chute de la tension d'alimentation fournie par la source d'alimentation commune de ces ensembles lors de la connexion de l'un d'entre eux.

## Revendications

1. Dispositif de protection contre les perturbations engendrées par la connexion à une source d'alimentation électrique continue ou la déconnexion de cette source d'un ensemble électronique, sur l'alimentation électrique délivrée par cette source, caractérisé en ce qu'il comporte au moins un élément (T1) d'impédance variable, et des moyens (R1, C1, D1) de commande de cette impédance, de manière que celle-ci présente une première valeur très grande lorsque ledit ensemble électronique est à l'état déconnecté, une deuxième valeur très faible lorsque cet ensemble est à l'état connecté, et une valeur variant lentement de la première à la deuxième valeur au passage de l'état déconnecté à l'état connecté, et variant rapidement de la deuxième à la première valeur au passage de l'état connecté à l'état déconnecté, le courant obtenu en sortie de cet élément alimentant ledit ensemble électronique.

2. Dispositif selon la revendication 1, caractérisé en ce que ledit élément d'impédance variable comporte un transistor de puissance à effet de champ (T1) dont la tension source-grille est fournie par lesdits moyens de commande (R1, C1, D1) de cet élément, et dont le courant de drain constitue le courant d'alimentation dudit ensemble électronique.

3. Dispositif selon la revendication 1, caractérisé en ce que lesdits moyens de commande comportent une cellule d'intégration du type R-C (R1, C1) alimentée par la tension d'alimentation délivrée par ladite source lorsque ledit ensemble électronique est à l'état connecté, et non alimentée lorsque cet ensemble est à l'état déconnecté, et une diode (D1) de décharge du condensateur (C1) de cette cellule d'intégration au passage de l'ensemble électronique de l'état connecté à l'état déconnecté.

4. Dispositif selon l'une des revendications 1 à 3, caractérisé en ce que, ladite source d'alimentation fournissant audit ensemble électronique deux tensions de polarités opposées, il comporte les éléments suivant l'une de ces revendications pour chacune de ces polarités.

5. Dispositif suivant les revendications 3 et 4, caractérisé en ce que pour chacune des polarités la diode (D11, D12) de décharge du condensateur (C11, C12) de la cellule d'intégration associée à cette polarité est connectée d'une part à l'une des bornes dudit condensateur et d'autre part à la sortie de l'élément d'impédance variable (T12, T11) associé à l'autre polarité.

6. Dispositif suivant les revendications 3 et 4, caractérisé en ce que la cellule d'intégration du type R-C associée à chaque polarité comporte en outre une résistance (R21; R22) de forte valeur connectée en parallèle sur l'élément d'impédance variable (T11, T12) associé à l'autre polarité.

## Patentansprüche

1. Vorrichtung zum Schutz gegen Störungen, die durch das Anschließen einer elektronischen Einheit an eine elektrische Gleichspannungsversorgungsquelle oder das Abtrennen von dieser Quelle auf die von dieser Quelle gelieferte elektrische Spannung verursacht werden, dadurch gekennzeichnet, daß die Vorrichtung mindestens ein veränderliches Impedanzelement (T1) und Mittel (R1, C1, D1) zum Steuern dieser Impedanz aufweist, derart, daß diese einen ersten sehr großen Wert besitzt, wenn die elektronische Einheit abgeschaltet ist, und einen sehr kleinen Wert besitzt, wenn die Einheit angeschaltet ist, und beim Übergang vom abgeschalteten Zustand in den angeschalteten Zustand langsam vom ersten in den zweiten Wert übergeht und sich beim Übergang vom angeschalteten Zustand in den abgeschalteten Zustand schnell vom zweiten in den ersten Wert übergeht, wobei der am Ausgang dieses Elementes erhaltene Strom die elektronische Einheit speist.

2. Vorrichtung nach Anspruch 1, dadurch gekennzeichnet, daß das veränderliche Impedanzelement einen Feldeffekt-Leistungstransistor (T1) aufweist, dessen Source-Gate-Spannung von den Steuermitteln (R1, C1, D1) dieses Elementes geliefert wird und dessen Drain-Strom den Speisestrom der elektronischen Einheit bildet.

3. Vorrichtung nach Anspruch 1, dadurch gekennzeichnet, daß die Steuermittel eine Integrierzelle des Typs R-C (R1, C1), die von der Speisespannung gespeist wird, die die Quelle liefert, wenn die elektronische Einheit angeschaltet ist, und die nicht gespeist wird, wenn die Einheit abgeschaltet ist, und eine Diode (D1) zum Entladen des Kondensators (C1) der Integrierzelle beim Übergang der elektronischen Einheit vom angeschalteten Zustand in den abgeschalteten Zustand aufweist.

4. Vorrichtung nach einem der Ansprüche 1 bis 3, dadurch gekennzeichnet, daß die Versorgungsspannung zwei entgegengesetzt gepolte Vorspannungen an die elektronische Einheit liefert und für jede dieser Vorspannungen die Elemente gemäß einem der obigen Ansprüche aufweist.

5. Vorrichtung nach den Ansprüchen 3 und 4, dadurch gekennzeichnet, daß für jede der Vorspannungen die Entladungsdiode (D11, D12) des Kondensators (C11, C12) der dieser Vorspannung zugeordneten Integrierzelle einerseits an eine der Klemmen des Kondensators und andererseits an den Ausgang des veränderlichen Impedanzelementes (T12, T11) angeschlossen ist, das der anderen Vorspannung zugeordnet ist.

6. Vorrichtung nach den Ansprüchen 3 und 4, dadurch gekennzeichnet, daß die jeder Vorspannung zugeordnete Integrierzelle des Typs R-C weiter einen Widerstand (R21; R22) mit einem sehr hohen Wert aufweist, der parallel an das der anderen Vorspannung zugeordnete Element veränderlicher Impedanz (T11, T12) angeschlossen ist.

## Claims

1. Device for protecting against transients on a direct current electrical power supply caused by connecting an electronic system to said supply or disconnecting said system therefrom, characterised in that it comprises at least one variable impedance component (T1) and means (R1, C1, D1) controlling said impedance so that it has a very high first value when said electronic system is disconnected, a very low second value when said system is connected and a value varying slowly from said first value to said second value on changing from the disconnected state to the connected state and varying quickly from said second value to said first value on changing from the connected state to the disconnected state, the output current of said component feeding said electronic system.

2. Device according to claim 1 characterised in that said variable impedance component includes a power field-effect transistor (T1) the source-gate voltage of which is provided by said control means (R1, C1, D1) of said component and the drain current of which constitutes the feed current to said electronic system.

3. Device according to claim 1 characterised in that said control means include an R-C type integrator circuit (R1, C1) supplied with the supply voltage supplied by said power supply when said electronic system is connected and not so supplied when said system is disconnected and a diode (D1) for discharging the capacitor (C1) of said integrator circuit when the electronic system changes from the connected state to the disconnected state.

4. Device according to any one of claims 1 to 3 characterised in that said power supply supplies two voltages of opposite polarity to said electronic system and includes components according to any one of the aforesaid claims for each of said polarities.

5. Device according to claims 3 and 4 characterised in that for each polarity the diode (D11, D12) for discharging the capacitor (C11, C12) of the integrator circuit associated with said polarity is connected to one side of said capacitor and to the output of the variable impedance component (T12, T11) associated with the other polarity.

6. Device according to claims 3 and 4 characterised in that the R-C type integrator circuit associated with each polarity further includes a high value resistor (R21; R22) shunting the variable impedance components (T11, T12) associated with the other polarity.
